# EUROPÄISCHE PATENTSCHRIFT

(11) **EP 2 171 315 B1**
(45) Veröffentlichungstag und Bekanntmachung des Hinweises auf die Patenterteilung: **18.05.2011**
(21) Anmeldenummer: 09765544.3
(22) Anmeldetag: 05.06.2009
(51) Int. Cl.: F16H 59/10, F16H 59/04, G05G 9/047

(54) **ELEKTROMECHANISCHE GEBEREINRICHTUNG**
ELECTROMECHANICAL TRANSDUCER DEVICE
DISPOSITIF D ÉMISSION ÉLECTROMÉCANIQUE

(30) Priorität: 18.06.2008 DE 102008028618
(43) Veröffentlichungstag der Anmeldung: 07.04.2010
(73) Patentinhaber: ECS Engineered Control Systems AG, 9015 St. Gallen (CH)
(72) Erfinder: KAMMER, Thomas, 35444 Biebertal (DE); UHLENBRUCK, Falk, 35644 Hohenahr (DE)
(74) Vertreter: Müller, Eckhard
(86) Internationale Anmeldenummer: PCT/EP2009/004033
(87) Internationale Veröffentlichungsnummer: WO 2009/152964

(56) Entgegenhaltungen:
- EP-A- 1 772 649
- EP-A- 2 058 561
- GB-A- 2 091 423
- US-A1- 2008 041 182

## Beschreibung

Die Erfindung betrifft eine elektromechanische Gebereinrichtung zur Steuerung mindestens einer Funktion eines räumlich vom Geber angeordneten Getriebes oder Antriebs eines Fahrzeugs.

### Hintergrund und Stand der Technik

Elektromechanische Gebereinrichtungen zur Steuerung von Funktionen eines Fahrzeuggetriebes oder eines Fahrzeugantriebs, wie etwa Schalthebel, welche in diverse unterschiedliche Schaltpositionen überführt werden können, sind als solche im Stand der Technik bekannt. Bei Schalthebeln für Schalt- oder Automatikgetriebe ist es üblich, die unterschiedlichen Schaltpositionen, wie etwa P, N, R, S des Schalthebels mittels einer Vielzahl unterschiedlicher Hall-Sensoren zu erfassen. Hierbei ist vorgesehen, parallel zur Schwenkebene des Hebels eine Platine anzuordnen, welche mit einzelnen voneinander beabstandeten Hall-Sensoren bestückt ist.

Dabei ist die Anordnung der Hall-Sensoren derart ausgebildet, dass jeder einzelne der Hall-Sensoren jeweils eine Position des Schalt- und Wählhebels erfassen kann. Solche Hall-Sensoren sind ferner dazu ausgebildet, ein binäres Signal zu erzeugen, welches Aufschluss darüber gibt, ob sich dem Hall-Sensor gegenüberliegend ein am Schalthebel oder Wählhebel angeordnetes Magnetelement befindet. Damit jede einnehmbare Schaltstellung des Wählhebels eindeutig erfasst werden kann, müssen eine Vielzahl voneinander beabstandeten Hall-Sensoren über eine verhältnismäßig große Fläche verteilt angeordnet und elektrisch kontaktiert werden.

Die DE 20 2007 000 210 U1 beschreibt eine Shift-by-Wire Betätigungsvorrichtung für ein Fahrzeuggetriebe. Die Vorrichtung besteht aus einem Schalthebel, welche mittels einer Schalthebelaufnahme an einer ersten Achse gelagert ist. An einem Lagerzapfen der Schalthebelaufnahme ist ein Permanentmagnet angeordnet, der zur unmittelbaren Erfassung der Winkelstellung des Schalthebels mit einem gegenüberliegenden Hall-Sensor zusammenwirkt.

Die EP 0 075 693 A1 beschreibt einen Gangwähler für ein Getriebe, bei welchem die Stellung eines Schalthebels mittels magnetempfindlicher Sensoren und mittels am Schalthebel befestigter Magnete kontakt- und berührungslos abtastbar ist. Die einzelnen magnetempfindlichen Sensoren sind dabei so angeordnet, dass für jede zu unterscheidende Stellung des Schalthebels ein eigener Sensor vorgesehen ist, oder dass weniger Sensoren als Gänge vorgesehen sind, wobei dann die Stellung des Schalthebels aus der Kombination der jeweils angesteuerten Sensoren nach einem Code ermittelbar ist.

EP 1 772 649 zeigt eine elektromechanische Gebereinrichtung mit den Merkmalen des Oberbegriffs des Anspruchs 1.

Nachteilig bei solch vorbekannten Gebereinrichtungen ist die Verwendung einer Vielzahl von Hall-Sensoren und die damit verbundene verhältnismäßig große Fläche der Platine. Diese ist insbesondere im Hinblick auf den im Fahrzeug nur begrenzt zur Verfügung stehenden Bauraum von Nachteil.

Des Weiteren müssen derartige im Stand der Technik übliche Positionserfassungseinrichtungen jeweils individuell an die Geometrie und Ausgestaltung des Schalt- oder Wählhebels angepasst werden. Insoweit ist für unterschiedliche Fahrzeugtypen mit unterschiedlichem Wähl- und Schalthebel stets eine speziell an die jeweiligen Begebenheiten konfigurierte und angepasste Platine erforderlich. Dies stellt sich insbesondere dann als nachteilig dar, wenn eine breite Palette von Schalt- oder Wähleinrichtungen unterschiedliche lange Schalthebel aufweisen. Insbesondere, wenn ein Fahrzeug als Links- oder Rechtslenker-Variante ausgebildet ist, erfordert dies eine der Links- oder Rechtslenker-Variante angepasste Anordnung und Ausgestaltung der Platine in Bezug auf den Wähl- oder Schalthebel.

### Aufgabe

Der Erfindung liegt demnach die Aufgabe zugrunde, eine vereinfachte Gebereinrichtung zur Steuerung eines Antriebs oder Getriebes eines Kraftfahrzeuges zur Verfügung zu stellen, welche einen einfachen, leicht zu montierenden Aufbau aufweist, welche eine hohe Funktionssicherheit, insbesondere zur Erfassung von Schalt- und Wählstellungen des Schalthebels aufweist, welche mit einer deutlich geringeren Anzahl von Sensorelementen auskommt, welche universell an unterschiedliche Gebereinrichtungen anpassbar ist und die in der Herstellung besonders kostengünstig implementiert werden kann.

### Erfindung und vorteilhafte Wirkungen

Die der Erfindung zugrundeliegende Aufgabe wird mit Hilfe einer Gebereinrichtung gemäß dem Patentanspruch 1 gelöst. Vorteilhafte Ausgestaltungen der Erfindung sind in den zugehörigen Unteransprüchen angegeben.

Die erfindungsgemäße Gebereinrichtung ist zur Steuerung mindestens einer Funktion eines räumlich entfernt angeordneten Getriebes oder eines Antriebs eines Fahrzeugs ausgebildet und weist einen, um zumindest eine erste Achse schwenkbar betätigbaren Hebel auf, welcher vom anzusteuernden Getriebe oder Antrieb mechanisch entkoppelt ist. Die Stellbewegung oder Stellposition des Hebels ist somit in elektrische Signale umwandelbar, welche letztlich zur Steuerung der Funktion des Getriebes oder Antriebs Verwendung finden. Der Hebel der Gebereinrichtung ist mittels einer Aufhängung an einer ersten Achse gelagert, wobei die Achse an einem innerhalb der Aufhängung zu liegen kommenden Endabschnitt zumindest eine erste Komponente einer magnetischen Drehwinkelsensoranordnung aufweist und zur unmittelbaren Erfassung der Winkelstellung oder der Drehbewegung des Hebels mit einer zweiten Komponente der Drehwinkelsensoranordnung zusammenwirkt, welche an der Aufhängung, dem Endabschnitt der Achse gegenüberliegend angeordnet ist. Die Erfindung zeichnet sich insoweit dadurch aus, dass anstelle von mehreren räumlich entfernt voneinander angeordneten Hall-Sensoren nunmehr prinzipiell ein einziger Drehwinkelsensor ausreichend ist, um sowohl die Winkelstellung als auch eine Dreh- oder Schwenkbewegung des Hebels zu erfassen und mittels einer nachgeschalteten elektronischen Auswerteeinheit einer vorgegebenen Stellposition zuzuordnen. Mit erster und zweiter Komponente einer magnetischen Drehwinkel-Sensoranordnung sind deren paarweise miteinander korrespondierenden Elemente, nämlich ein Drehwinkelsensorelement und ein Magnetfeld erzeugendes Magnetelement gemeint. Dabei spielt es grundsätzlich keine Rolle, welche der beiden Komponenten an der Aufhängung und welche der beiden Komponenten an der Achse, welche den Drehpunkt bildet, angeordnet ist.

Die Aufhängung ist zur Aufnahme eines sich im Wesentlichen senkrecht zur ersten Achse erstreckenden Lagerbolzens ausgebildet, welcher starr mit dem vom Benutzer zu betätigenden Hebel verbunden ist. Dabei ist eine die Drehwinkelsensoren aufnehmende Platine unmittelbar an der Aufhängung selbst angeordnet. Die Platine weist zumindest einen von der Platinenebene hervorstehenden, etwa flanschartig ausgebildeten Fortsatz auf, an welchem zumindest eines der Drehwinkel-Sensorelemente anordenbar ist. Dabei ist insbesondere vorgesehen, dass die Flächennormale dieses Fortsatzes und folglich auch die Flächennormale des daran angeordneten Drehwinkel-Sensorelements sich im Wesentlichen parallel zur ersten Achse erstrecken. Hierdurch kann eine Schwenkbewegung der Aufhängung gegenüber der ersten Achse, aber auch die daraus resultierende Winkelstellung des bezüglich der ersten Achse an der Aufhängung zwangsgeführten Hebels präzise und eindeutig ermittelt werden.

Nach einer ersten vorteilhaften Ausgestaltung der Erfindung ist vorgesehen, dass zur Ermittlung der Winkelstellung oder der Drehbewegung des Hebels in Bezug auf die erste Achse ein einziges Drehwinkelsensorelement vorgesehen ist. Das Drehwinkelsensorelement ist dabei insbesondere als integrierter Schaltkreis ausgebildet und kann intern eine Vielzahl einzelner magnetoresistiver oder auf dem Hall-Effekt basierende Elemente aufweisen, die auf einer Platine oder innerhalb des Sensorelements unterschiedlich zueinander ausgerichtet und elektrisch miteinander gekoppelt sind, sodass ein abgreifbares elektrisches Signal eine eindeutige Zuordnung über die relative Ausrichtung des Drehwinkel-Sensorelements zur Orientierung des extern angelegten Magnetfeldes ermöglicht.

Die einzelnen magnetoresistiven Elemente des Drehwinkel-Sensorelements können dabei insbesondere als sogenannte GMR-Elemente oder AMR-Elemente ausgebildet sein, welche den sogenannten Großen Magnetoresistiven Effekt oder den Anisotropen Magnetoresistiven Effekt zur Erfassung und Quantifizierung des Magnetfeldes ausnutzen. Es ist insbesondere vorgesehen, den Sensor als sogenannten 360° Sensor auszubilden, welcher zu jeder Stellposition und Winkelstellung des Magnetelements ein dem Stellwinkel entsprechendes eindeutiges elektrisches Signal zur Verfügung stellt. Alternativ oder ergänzend hierzu können die Drehwinkelsensoren einzig auf der Ausnutzung des Hall-Effektes basieren, so dass die erfindungsgemäß vorgesehenen integrierten Schaltkreise anstelle von magnetoresistiven Elementen auch einzelne elektrisch miteinander gekoppelte Hall-Elemente aufweisen können.

Durch Vorsehen eines einzigen Drehwinkel-Sensorelements im Bereich der Schwenkachse des Hebels bzw. der den Hebel aufnehmenden Aufhängung kann in vorteilhafter Weise auf die Implementierung einer Vielzahl räumlich voneinander beabstandeter Hall-Sensoren verzichtet werden. Das vom DrehwinkelSensorelement erzeugbare elektrische Signal gibt unmittelbar Aufschluss über die aktuelle Position oder Winkelgeschwindigkeit des mit dem Drehwinkelsensor magnetisch gekoppelten und mit dem Hebel bzw. mit der Aufhängung mechanisch gekoppelten Magnetelements.

Auch kann durch die erfindungsgemäße Anordnung eines einzigen Drehwinkel-Sensorelements der Schaltungsaufwand zur Schwenk- oder Drehwinkelerfassung deutlich verringert werden. Denn es müssen nunmehr nicht mehr eine Vielzahl einzelner Sensorelemente, etwa Hall-Sensoren, sondern lediglich nur noch der Ausgang eines einzigen Drehwinkel-Sensorelements mit einer nachgeschalteten Auswerteeinheit elektrisch gekoppelt werden, welche in Abhängigkeit von der Amplitude oder Frequenz des vom Drehwinkelsensor erzeugten Signals den Drehwinkel und/oder die Winkelgeschwindigkeit des Hebels ermitteln kann.

Die Anordnung eines Drehwinkel-Sensorelements in unmittelbarer Nähe zur Schwenkachse hat ferner den Vorteil, dass eine derartige Winkel- und Positionserfassung gänzlich unabhängig von einer konkreten Ausgestaltung eines um diese Achse verschwenkbaren Hebels erfolgen kann. Insoweit ist die erfindungsgemäße Anordnung universell auf unterschiedlichste Ausgestaltungen von Gebereinrichtungen anpassbar. Auch spielt es dabei keine Rolle mehr, ob die Gebereinrichtung für eine Linkslenker- oder Rechtslenker-Variante eines Fahrzeugs vorgesehen ist. Des Weiteren kann in vorteilhafter Weise auf eine parallel zur Schwenkebene des Hebels verlaufende Platine verzichtet werden, sodass im Endeffekt wertvoller Bauraum eingespart werden kann.

Nach einer weiteren vorteilhaften Ausgestaltung der Erfindung ist vorgesehen, dass die erste Komponente der Drehwinkel-Sensoranordnung als ein Magnetfeld erzeugendes Magnetelement und die zweite Komponente der Drehwinkel-Sensoranordnung als Drehwinkelsensor ausgebildet ist. Das Magnetelement weist naturgemäß einen magnetischen Nord- und einen magnetischen Südpol auf, welcher die Symmetrie der Achse, an welcher die Aufhängung angelenkt ist, bricht. Dabei ist insbesondere vorgesehen, dass eine der Komponenten der Drehwinkelsensoranordnung, insbesondere das Magnetfeld erzeugende Magnetelement, drehfest an einem stirnseitigen Endabschnitt der Achse angeordnet ist und die zugehörige andere Komponente, das heißt das Drehwinkelsensorelement in gedachter axialer Verlängerung zur Achse an der Aufhängung angeordnet ist.

Die Achse selbst oder ihr Lagerbolzen kann dabei ortsfest gegenüber der Fahrzeugkarosserie angeordnet sein, sodass ein Verschwenken des Drehwinkelsensors gegenüber dem feststehenden Magnetelement zur Erzeugung auswertbarer Signale führt. Natürlich ist auch eine umgekehrte Ausgestaltung denkbar, bei welcher der Sensor selbst ortsfest gegenüber der Fahrzeugkarosserie angeordnet bleibt, während das ihm gegenüberliegende Magnetelement einer Schwenk- oder Drehbewegung unterliegt. Denn zur Drehwinkel- oder Positionsbestimmung ist allein die Relativbewegung zwischen den die Drehwinkel-Sensoranordnung bildenden Elementen, Magnetelement und Drehwinkelsensor ausschlaggebend.

Nach einer weiteren vorteilhaften Ausgestaltung der Erfindung ist vorgesehen, dass der Drehwinkelsensor im Wesentlichen flach ausgebildet, insbesondere an einer Platine angeordnet ist und mit seiner Flächennormalen im Wesentlichen parallel zur ersten Achse, auf welcher das Magnetelement angeordnet sein kann, ausgerichtet ist. Der Drehwinkelsensor kann dabei parallel versetzt zur Achse angeordnet sein. Vorzugsweise ist er aber fluchtend und in axialer Verlängerung zur Achse angeordnet.

Alternativ oder ergänzend als Redundanz hierzu kann vorgesehen sein, dass das Magnetelement auf der Achse angeordnet ist und das zugehörige Sensorelement derart zur Achse ausgerichtet am Hebel oder an dessen Aufhängung angeordnet ist, dass seine Flächennormale bezogen auf die Achse in Radialrichtung zeigt. Auch hierbei kann eine entsprechende Relativbewegung zwischen Drehwinkelsensor und Magnetelement eindeutig erfasst, in ein der Winkelstellung entsprechendes elektrisches Signal umgewandelt und einer nachgeschalteten Auswerteeinheit zugeführt werden.

Des Weiteren ist nach der Erfindung vorgesehen, dass der Hebel radial beabstandet von der ersten Achse ein Langloch der Aufhängung durchsetzt, welches sich parallel zur Axialerstreckung der ersten Achse erstreckt und welches eine Schwenkbewegung des Hebels um eine zweite Achse gegenüber der Aufhängung begrenzt. Für die Gebereinrichtung ist somit insbesondere vorgesehen, dass eine von einem Benutzer initiierbare Schwenkbewegung des Hebels mit der ersten Achse als Schwenkachse im Bereich der Langlochführung in eine senkrecht zur Längserstreckung des Langlochs gerichtete Schwenkbewegung der Aufhängung übertragen wird.

Die Langlochführung bewirkt somit, dass jegliche vom Hebel ausgehende Schwenkbewegung mit der ersten Achse als Schwenkachse nahezu eins zu eins auf die Aufhängung übertragen wird. Die Langlochführung erfüllt somit, bezogen auf die erste Achse als Schwenkachse, eine Mitnehmerfunktion. In einer Richtung senkrecht hierzu ist vorgesehen, dass der Hebel selbst mit der zweiten Achse als Schwenkachse an der Aufhängung schwenkbar angelenkt ist. Diese zweite Schwenkbewegung ermöglicht ein Verschwenken des Hebels gegenüber seiner Aufhängung in Richtung senkrecht zur gekoppelten Schwenkbewegung von Hebel und Aufhängung mit der ersten Achse als Drehachse.

Bezogen auf die Längserstreckung des Hebels sind die beiden, die erste und die zweite Achse in etwa gleicher Höhe angeordnet. Eine versetzte Anordnung ist hierbei jedoch gleichermaßen implementierbar.

Bei einem Automatikgetriebe eines Kraftfahrzeuges können diese beiden Schwenkachsen etwa dazu Verwendung finden, dass der Wählhebel entlang der einen Schwenkrichtung in die unterschiedlichen Schaltpositionen P, N, R, S überführt werden kann, während der Hebel durch eine Schwenkbewegung mit der zweiten Achse als Schwenkachse entweder in die Automatikgasse oder in den manuellen Schaltmodus überführt werden kann.

Nach einer Weiterbildung der Erfindung ist vorgesehen, dass die zweite Achse im Wesentlichen senkrecht zur ersten Achse ausgerichtet ist, und dass die Aufhängung zur Aufnahme von zwei einander in axialer Verlängerung gegenüberliegender Lagerbolzen der ersten Achse zur schwenkbaren Lagerung der Aufhängung gegenüber der ersten Achse ausgebildet ist. Hierzu weist die Aufhängung an gegenüberliegenden Endabschnitten vorzugsweise Lageraugen auf, in welchen die einander gegenüberliegenden Endabschnitte der Lagerbolzen der ersten Achse zu liegen kommen. Die erste Achse, bzw. deren Lagerbolzen sind sozusagen nicht durchgehend ausgebildet, sondern die Aufhängung befindet sich zwischen diesen, wobei in dem von der Aufhängung gebildeten Zwischenraum zwischen den beiden stirnseitigen Endabschnitten der ersten Achse die zweite Achse an der Aufhängung gelagert ist, wobei die Längserstreckung der beiden Achsen in etwa einen Winkel von 90° zueinander einnehmen.

Nach einer Weiterbildung der Erfindung ist vorgesehen, dass am Hebel radial beabstandet zur Schwenkachse, also entweder zur ersten und/oder zur zweiten Schwenkachse ein weiteres Magnetelement angeordnet ist, dessen Position mittels einem einzigen, an der Aufhängung oder an einer daran angeordneten Platine befestigten magnetischen Positionssensor erfassbar ist. Dieser magnetische Positionssensor dient der Erfassung der Schwenkbewegung oder Schwenkstellung des Hebels gegenüber seiner Aufhängung, wobei auch dieser Positionssensor, ähnlich wie der Drehwinkelsensor unter Zugrundelegung einer entsprechenden Kalibrierung, ausgehend von dem Betrag oder dem Vorzeichen eines elektrischen und vom zugeordneten Magnetelement hervorgerufenen Signals eine unmittelbare Zuordnung der Position bzw. der Winkelstellung des Hebels zur Verfügung ermöglicht.

Dieser magnetische Positionssensor kann in einer Platinenebene angeordnet sein, welcher senkrecht zur Axialerstreckung der zweiten Achse verläuft. Eine Schwenkbewegung des Hebels gegenüber der Aufhängung führt somit zu einem Verschwenken des Hebels parallel zur Platinenebene. Aufgrund des sich dabei ändernden Abstands zwischen dem am Hebel angeordneten Magnetelement und dem an der Platine angeordneten Positionssensor und der daraus ableitbaren elektrischen Signale kann eine präzise Positions- und Winkelstellungserfassung des Hebels mit nur einem einzigen Positions- und Drehwinkelsensor grundsätzlich zur Verfügung gestellt werden.

Die im Rahmen der Erfindung vorgeschlagenen magnetischen Positions- und Drehwinkelsensoren können jeweils zwei Sätze von einzelnen magnetosensitiven Elementen aufweisen, um letztlich eine Redundanz und eine erhöhte Ausfallsicherheit der Drehwinkelerfassung zur Verfügung stellen zu können.

Des Weiteren ist nach einer besonders vorteilhaften Ausgestaltung der Erfindung vorgesehen, dass an der Aufhängung und/oder an der daran befestigten Platine zumindest drei oder weitere, zur Positionserfassung des Hebels vorgesehene Sensorelemente entlang der Schwenkrichtung des Hebels an der Aufhängung oder der Platine nebeneinander angeordnet sind. Dabei ist insbesondere vorgesehen, dass diese mehreren, ggf. unmittelbar aneinander angrenzenden Sensorelemente ausschließlich in Schwenkrichtung des Hebels nebeneinander, also mit nahezu konstanter Radialkomponente auf die Schwenkbewegung des Hebels bezogen, an der Platine oder an der Aufhängung angeordnet sind.

Dabei ist insbesondere vorgesehen, dass das den Sensorelementen zugeordnete und am Hebel angeordnete Magnetelement zur zeitgleichen Aktivierung zumindest zweier in Schwenkrichtung nebeneinander angeordneten Sensorelemente ausgebildet ist. Auf diese Art und Weise kann eine Redundanz geschaffen werden, für den Fall, dass eines der Sensorelemente eine Fehlfunktion aufweist oder gänzlich ausfällt. Aus der Information der übrigen Sensorelemente lässt sich dann immer noch eindeutig und zuverlässig die Position des Schwenkhebels innerhalb der Aufhängung bestimmen.

### Ausführungsbeispiele

Weitere Ziele, Merkmale sowie vorteilhafte Wirkungen der vorliegenden Erfindung werden unter Bezugnahme auf die anhand der Figuren erläuterten Ausführungsbeispiele verdeutlicht. Dabei bilden sämtliche wörtlich beschriebenen und bildlich wiedergegebenen Merkmale in ihrer sinnvollen Kombination den Gegenstand der vorliegenden Erfindung; auch unabhängig von den Patentansprüchen und deren Rückbezügen.

Es zeigen:
- Fig. 1: eine schematische Darstellung der Gebereinrichtung mit einem über eine Aufhängung an einer Schwenkachse gelagerten Schalt- oder Wählhebel,
- Fig. 2: eine Seitenansicht der Ausführung gemäß Fig. 1,
- Fig. 3: eine perspektivische Darstellung der innerhalb der Aufhängung angeordneten Platine und des Wähl- oder Schalthebels,
- Fig. 4: eine schematische und perspektivische Darstellung eines Magnetelement-Sensor-Paares,
- Fig. 5: eine alternative Ausgestaltung einer Drehwinkel-Sensoranordnung,
- Fig. 6: eine schematische und perspektivische Darstellung eines am Schalthebel angeordneten Magnetelements mit zugehörigen Sensorelementen,
- Fig. 7: eine alternative Ausgestaltung zur Ausführung gemäß Fig. 6 mit mehreren in Schwenkrichtung nebeneinander angeordneten Sensorelementen und
- Fig. 8: eine weitere Anordnung von vier einzelnen neben- und übereinander angeordneten Sensorelementen.

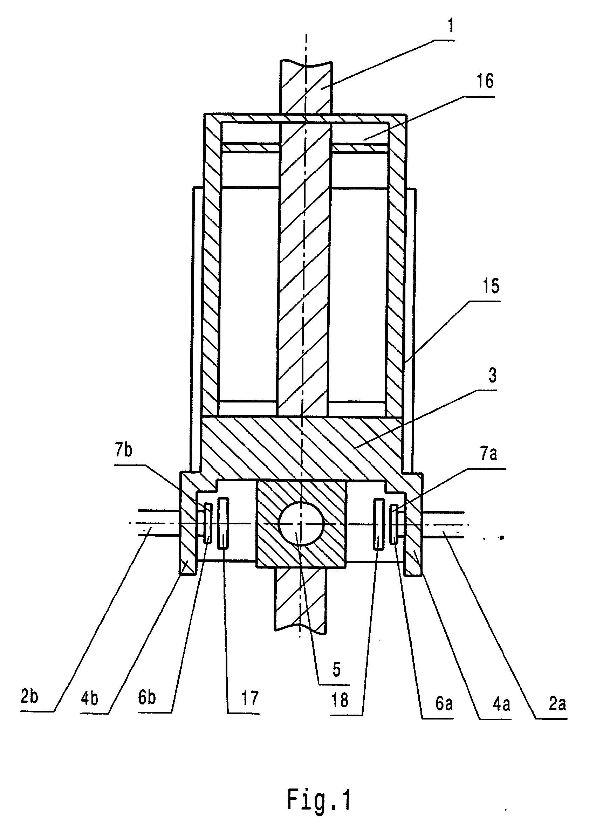

Die Figuren 1 bis 3 verdeutlichen eine erste Ausgestaltung der Erfindung für ein Automatikgetriebe eines Kraftfahrzeugs, wobei der Schalt- und Wählhebel 1 bezüglich einer ersten Achse 2a, 2b und bezüglich einer zweiten Achse 5 in zwei unterschiedliche Richtungen verschwenkbar gelagert ist. Die beiden unterschiedlichen Schwenkebenen definieren etwa einen manuellen Schaltmodus und die sogenannte Automatikgasse, in welcher der Hebel in die Schaltpositionen P, N, R, S überführbar ist. Der Hebel 1 erstreckt sich durch ein am oberen Abschnitt einer Aufhängung 3 vorgesehenes Langloch 16, wobei die Aufhängung als Schalthebelkäfig ausgebildet sein kann und ein Langloch 16 mit einer Längserstreckung parallel zur ersten Schwenkachse 2a, 2b aufweist.

Die Aufhängung 3 bzw. der Schalthebelkäfig weist an seinem unteren Abschnitt an beiden Seitenenden Lageraugen 4a, 4b auf, welche die freien Endabschnitte der Lagerbolzen 2a, 2b aufnehmen, wodurch die Aufhängung 3 insgesamt um diese erste Achse 2a, 2b verschwenkt werden kann.

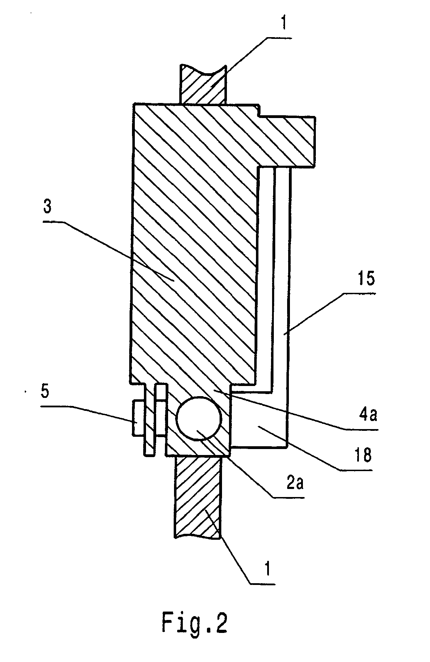

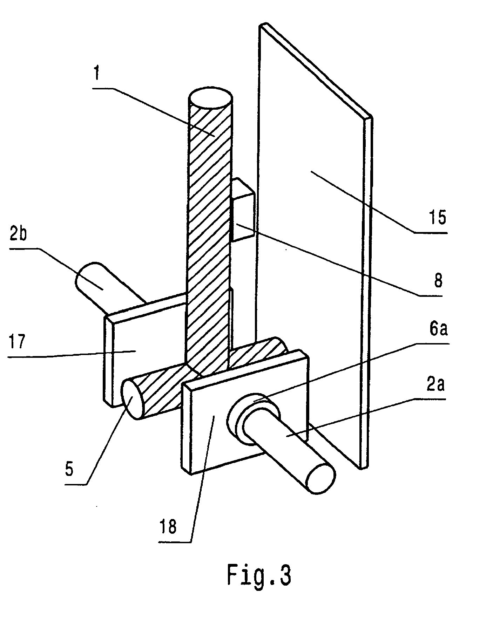

Wird vom Benutzer eine Schwenkbewegung auf den Hebel 1 mit der Achse 2a, 2b als Schwenkachse ausgeübt, so führt dies aufgrund der in dieser Richtung vorgesehenen Zwangsführung zu einer Mitnahmebewegung der Aufhängung 3. An der Aufhängung selbst ist eine in den Figuren 2 und 3 verdeutlichte Platine 15 angeordnet, die in ihrem unteren, in Höhe der Lagerbolzen 2a, 2b liegenden Abschnitt flanschartig ausgebildete Fortsätze 17, 18 aufweist, an denen zumindest ein Element einer Drehwinkel-Sensoranordnung vorgesehen ist, während ein korrespondierendes Element der Drehwinkel-Sensoranordnung 6a, 6b am freien Endabschnitt der Lagerbolzen 2a, 2b angeordnet ist.

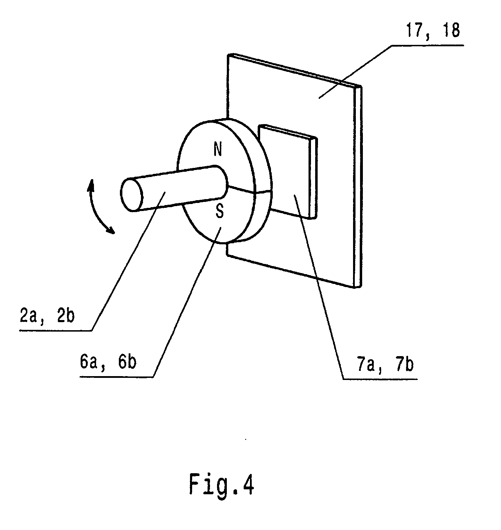

Eine Schwenkbewegung der Aufhängung 3 führt somit zu einer entsprechenden Schwenkbewegung der daran angeordneten Platine 15 und den daran im Bereich der flanschartigen Fortsätze 17, 18 angeordneten Drehwinkel-Sensorelemente 7a, 7b. Diesen gegenüberliegend ist an den Lagerbolzen 2a, 2b jeweils ein ein Magnetfeld erzeugendes Magnetelement 6a, 6b angeordnet, welches, wie in Fig. 4 dargestellt, beispielsweise eine kreisrunde Außenkontur aufweisen kann und dessen Winkelstellung unmittelbar vom gegenüberliegend zu liegen kommenden Sensorelement 7a, 7b in ein eindeutiges elektrisches Signal umgewandelt werden kann.

Das Magnetelement 6a, 6b ist insbesondere als Permanentmagnet ausgebildet. Es kann aber auch, je nach Anforderungsprofil, als Elektromagnet vorgesehen werden.

Anstelle der gezeigten konkreten Ausführung, bei welcher die Drehwinkel-Sensorelemente 7a, 7b ortsfest mit der Aufhängung 3 und die ein Magnetfeld erzeugenden Elemente 6a, 6b an der Achse 2a, 2b angeordnet sind, kann auch eine umgekehrte Anordnung vorgesehen werden, bei welcher die Sensorelemente und ggf. eine zugehörige Platine ortsfest, bezogen auf die Kraftfahrzeug-Tragstruktur angeordnet sind, währen die das Magnetfeld erzeugende Magnetelemente am schwenkbar gelagerten Hebel 1 oder an der damit in Wirkverbindung stehenden Aufhängung 3, etwa dem Schalthebelkäfig angeordnet sind.

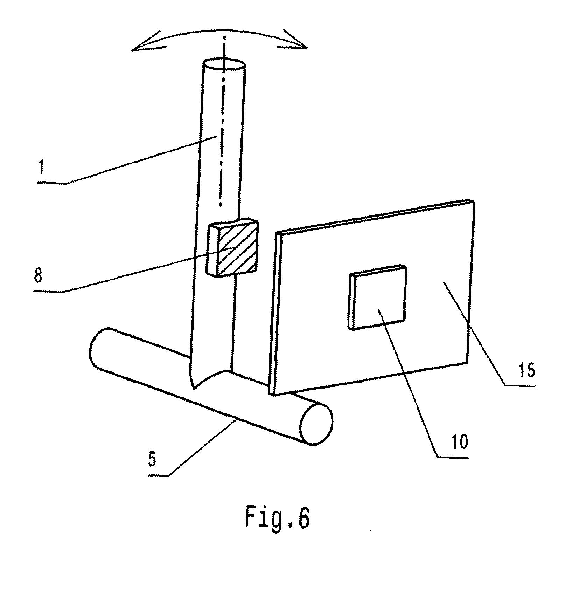

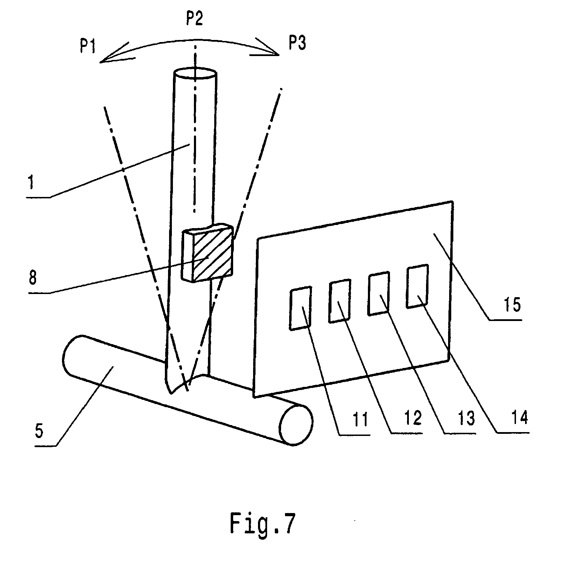

Der Schalthebelkäfig oder die Aufhängung 3 weist in ihrem in Fig. 1 und 2 unten liegenden Endabschnitt zwischen den beiden freien Enden der Achse 2a, 2b eine senkrecht dazu verlaufende Schwenkachse 5 auf, welche starr mit dem Hebel 1 gekoppelt ist, wie dies am besten aus Fig. 3 hervorgeht. An dem der Platine 15 zugewandten Abschnitt des Hebels 1 ist radial von der oder den Schwenkachsen 5, 2a, 2b beabstandet ein weiteres Magnetelement 8 vorgesehen, dessen Position, wie in die Figuren 6 und 7 angedeutet, bei einer Schwenkbewegung mit der Achse 5 als Schwenkachse von weiteren, an der Platine 15 angeordneten Sensorelementen 10, 11, 12, 13, 14 ermittelt werden kann.

Die mittels der Sensoren 7a, 7b erfassbare Schwenkbewegung bezüglich der ersten Achse 2a, 2b kann vollkommen unabhängig von der Winkelstellung des Hebels 1 in Bezug auf den Schalthebelkäfig 3 und deren Schwenkstellung bezüglich der Achse 5 erfolgen. Denn der Schalthebelkäfig 3 ist gegenüber der in Fig. 1 seitlichen Kippbewegung des Hebels 1 ortsfest gelagert. In gleicher Art und Weise kann natürlich auch die Stellung des Schwenkhebels 1 bezogen auf die Schwenkachse 5 unabhängig von der gerade eingenommenen Schwenkstellung des Schalthebelkäfigs 3 erfolgen.

Die in Fig. 4 angedeutete Messanordnung sieht einen Sensor 7a, 7b vor, der flach ausgebildet und im Wesentlichen parallel zur Platinenebene 15, 17 angeordnet ist. Das vom Dauermagneten 6a, 6b erzeugbare Magnetfeld kann im Sensor 7a, 7b in orthogonale und in der Platinenebene verlaufende Magnetfeldkomponenten unterteilt werden. Eine Drehung des Dauermagneten 6a, 6b um die Achse 2a, 2b führt zu einer entsprechenden Veränderung der messbaren Magnetfeldkomponenten, welche Aufschluss über die konkrete Winkelstellung des Magneten 6a, 6b in Bezug zur Orientierung des Sensorelementes 7a, 7b geben.

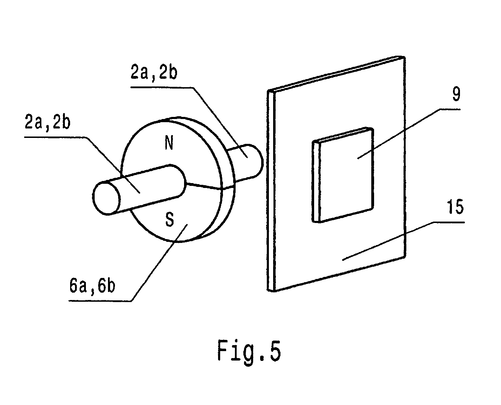

Die alternative oder ergänzende Anordnung gemäß Fig. 5 zeigt einen Sensor 9, dessen Flächennormale radial zur Drehachse 2a, 2b verläuft. Auch hierbei kann, eine entsprechende Kalibrierung vorausgesetzt, eine eindeutige Zuordnung der Winkelstellung des Magnetelementes 6a, 6b über die vom Sensor 9 generierbaren elektrischen Signale erfolgen. Allerdings wird hierbei das am Sensor 9 anliegende und vom Magnetelement 6a, 6b ausgehende Magnetfeld nicht in unterschiedliche Magnetfeldkomponenten in der Ebene des Sensors 9 zerlegt, sondern es wird lediglich eine in Fig. 5 in Vertikalrichtung verlaufende Magnetfeldkomponente hinsichtlich ihrer Ausrichtung und Magnetfeldstärke ermittelt.

Ganz ähnlich verhält es sich mit der relativen Anordnung des am Hebel 1 angeordneten Magnetelementes 8 und dem zugehörigen Positionssensor 10. Hierbei kann insbesondere anhand der Amplitude des aufgenommenen Messsignals und unter Zugrundelegung einer zuvor vorgenommenen Kalibrierung eine genaue Zuordnung gemessener Signale zu entsprechenden Schwenkstellungen oder - Positionen des Hebels 1 erfolgen.

In Fig. 7 ist schließlich eine weitere alternative Ausgestaltung dargestellt, wobei eine Vielzahl einzelner nebeneinander, ggf. auch räumlich voneinander beabstandeter Sensorelemente, insbesondere von einzelnen Hall-Sensoren 11, 12, 13, 14 an einer Platine 15 angeordnet sind, deren Platinenebene sich parallel zur Schwenkebene des Hebels 1, bezogen auf die Schwenkachse 5 erstreckt. Die wechselseitige Ausgestaltung von Magnetelement 8 und Sensoren 11, 12, 13, 14 ist dergestalt, dass die nach Art eines Schalters ausgebildeten Sensorelemente 11, 12, 13, 14 bei den vorgesehenen Positionen P1, P2 und P3 jeweils doppelt aktiviert sind. Befindet sich der Hebel 1 etwa in der Stellung P1, erzeugen die beiden ersten nebeneinanderliegenden Sensoren 11, 12 ein elektrisches Signal. In der Stellung P2 sind die beiden Sensoren 12 und 13 aktiv, während in der Stellung P3 des Hebels 1 die beiden letzten Sensoren 13, 14 ein elektrisch auswertbares Signal erzeugen.

Fällt nun einer dieser Sensoren aus, so kann aufgrund der Schaltzustände der übrigen Sensoren präzise und eindeutig auf die gerade vorhandene Wähl- oder Schaltstellung rückgeschlossen werden.

Die nachfolgend aufgeführte Wahrheitstabelle verdeutlicht dies. Fällt beispielsweise der Sensor 12 in der Stellung P2 aus, so sendet der Sensor 13 nach wie vor ein Signal. Aufgrund dessen, dass von Sensor 14 gerade kein Signal erzeugt wird und der weiteren Information, dass der Sensor 12 eine Fehlfunktion aufweist, kann nach wie vor anhand der übrigen drei funktionsfähigen Sensoren 11, 13, 14 die momentane Stellung des Hebels P1, P2 oder P3 jeweils präzise und eindeutig ermittelt werden.

| | 11 | 12 | 13 | 14 |
|---|---|---|---|---|
| P1 | 1 | 1 | 0 | 0 |
| P2 | 0 | 1 | 1 | 0 |
| P3 | 0 | 0 | 1 | 1 |

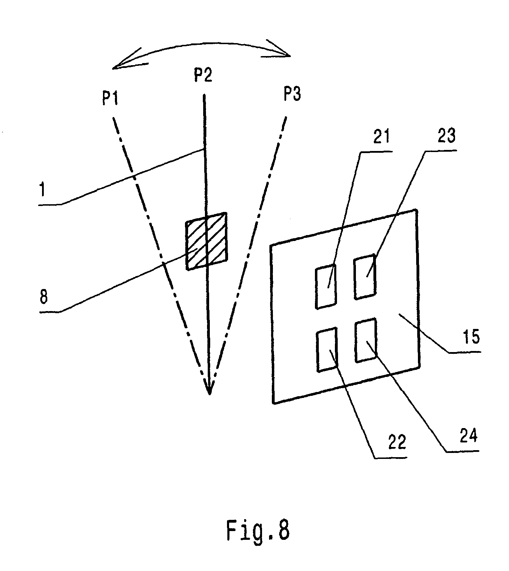

In Figur 8 ist eine weitere Ausgestaltung einer redundanten Erfassung für die Winkelstellung des Hebels 1 gezeigt. Im Unterschied zur Darstellung gemäß Fig.4 sind hierbei die beispielhaft angegebenen vier Sensorelemente 21, 22, 23, 24 sowohl übereinander als auch nebeneinander, quasi quadratisch zueinander angeordnet. Auch hierbei ist vorgesehen, dass der am Hebel 1 befestigte Magnet 8 zumindest von zwei der Sensoren 21, 22, 23, 24 erfasst werden kann, sodass sich im Endeffekt folgende Wahrheitstabelle ergibt:

| | 21 | 22 | 23 | 24 |
|---|---|---|---|---|
| P1 | 1 | 1 | 0 | 0 |
| P2 | 1 | 1 | 1 | 1 |
| P3 | 0 | 0 | 1 | 1 |

, wobei auch für den Fall ein eindeutig zuordenbares Signal erzeugt werden kann, selbst wenn die Elektronik nicht in der Lage sein sollte, anzugeben, welcher der Sensoren eine Fehlfunktion aufweist.

### Bezugszeichenliste

- 1: Wählhebel
- 2a, 2b: Achse, Lagerbolzen
- 3: Aufhängung
- 4a, 4b: Lageraugen
- 5: Schwenkachse
- 6a, 6b: Magnete
- 7a, 7b: Sensoren
- 8: Permanentmagnet
- 9: Sensor
- 10: Sensor
- 11: Sensor
- 12: Sensor
- 13: Sensor
- 14: Sensor
- 15: Platine
- 16: Langloch
- 17: Fortsatz
- 18: Fortsatz

## Patentansprüche

1. Elektromechanische Gebereinrichtung zur Steuerung mindestens einer Funktion eines räumlich entfernt angeordneten Getriebes oder Antriebs eines Fahrzeugs, mit einem um zumindest eine erste Achse (2a, 2b) schwenkbar betätigbaren und vom Getriebe oder Antrieb mechanisch entkoppelten Hebel (1), welcher mittels einer Aufhängung (3) an der ersten Achse (2a, 2b) gelagert ist, wobei die Achse (2a, 2b) an einem axialen Endabschnitt zumindest eine erste Komponente (6a, 6b) einer magnetischen Drehwinkelsensoranordnung (6a, 6b, 7a, 7b) aufweist und zur unmittelbaren Erfassung der Winkelstellung oder der Drehbewegung des Hebels (1) mit einer zweiten Komponente (7a, 7b) der Drehwinkelsensoranordnung zusammenwirkt, welche an der Aufhängung (3), dem Endabschnitt der Achse (2a, 2b) gegenüberliegend angeordnet ist, **dadurch gekennzeichnet, dass** der axiale Endabschnitt innerhalb der Aufhängung (3) zu liegen kommt, wobei eine die Drehwinkelsensoren (7a, 7b) aufnehmende Platine (15) an der Aufhängung (3) angeordnet ist und die Platine (15) zumindest einen von der Platinenebene hervorstehenden flanschartig ausgebildeten Fortsatz (17, 18) aufweist, welcher zur Aufnahme zumindest eines Drehwinkelsensorelements (7a, 7b) ausgebildet ist und mit seiner Flächennormalen im Wesentlichen parallel ersten Achse (2a, 2b) zu liegen kommt.

2. Gebereinrichtung nach Anspruch 1, wobei zur Ermittlung der Winkelstellung des Hebels (1) bezogen auf die erste Achse (2a, 2b) ein einziges Drehwinkelsensorelement (7a, 7b) vorgesehen ist.

3. Gebereinrichtung nach einem der vorhergehenden Ansprüche, wobei die erste Komponente (6a, 6b) der Drehwinkelsensoranordnung (6a, 6b, 7a, 7b) als ein Magnetfeld erzeugendes Magnetelement und die zweite Komponente (7a, 7b) der Drehwinkelsensoranordnung (6a, 6b, 7a, 7b) als Drehwinkelsensor ausgebildet sind.

4. Gebereinrichtung nach einem der vorhergehenden Ansprüche, wobei eine der Komponenten (6a, 6b, 7a, 7b) der Drehwinkelsensoranordnung stirnseitig am Endabschnitt der Achse (2a, 2b) drehfest angeordnet ist und die zugehörige andere Komponente (6a, 6b, 7a, 7b) in gedachter axialer Verlängerung zur Achse (2a, 2b) an der Aufhängung angeordnet ist.

5. Gebereinrichtung nach Anspruch 4, wobei der Drehwinkelsensor (7a, 7b) im Wesentlichen flach ausgebildet und mit seiner Flächennormalen im Wesentlichen parallel zur ersten Achse (2a, 2b) ausgerichtet ist.

6. Gebereinrichtung nach einem der vorhergehenden Ansprüche 1 bis 3, wobei das Magnetelement (6a, 6b) auf der Achse (2a, 2b) angeordnet ist und das zugehörige Sensorelement (7a, 7b) derart zur Achse ausgerichtet ist, dass seine Flächennormale bezogen auf die Achse (2a, 2b) in Radialrichtung zeigt.

7. Gebereinrichtung nach einem der vorhergehenden Ansprüche, wobei der Hebel (1) radial beabstandet von der ersten Achse (2a, 2b) ein Langloch der Aufhängung (3) durchsetzt, welches sich parallel zur ersten Achse (2a, 2b) erstreckt und welches eine Schwenkbewegung des Hebels (1) um eine zweite Achse (5) gegenüber der Aufhängung (3) begrenzt.

8. Gebereinrichtung nach Anspruch 7, wobei die erste Achse (2a, 2b) und die zweite Achse (5) im Wesentlichen senkrecht zueinander ausgerichtet sind und wobei die Aufhängung (3) zur Aufnahme von zwei einander in axialer Verlängerung gegenüberliegenden Lagerbolzen der ersten Achse (2a, 2b) zur schwenkbaren Lagerung der Aufhängung (3) gegenüber der ersten Achse (2a, 2b) ausgebildet ist.

9. Gebereinrichtung nach einem der vorhergehenden Ansprüche, wobei die Aufhängung (3) zur Aufnahme eines sich im Wesentlichen senkrecht zur ersten Achse (2a, 2b) erstreckenden Lagerbolzens (5) ausgebildet ist, welcher starr mit dem Hebel (1) verbunden ist.

10. Gebereinrichtung nach einem der vorhergehenden Ansprüche, wobei am Hebel (1) radial beabstandet zur Schwenkachse (2a, 2b, 5) ein weiteres Magnetelement (8) angeordnet ist, dessen Position mittels einem einzigen an der Aufhängung (3) angeordneten magnetischen Positionssensor (10) erfassbar ist.

11. Gebereinrichtung nach einem der vorhergehenden Ansprüche, wobei an der Aufhängung (3) und/oder an der daran befestigten Platine (15) zumindest drei oder mehr zur Positionserfassung des Hebels (1) vorgesehene Sensorelemente (11, 12, 13, 14) entlang der Schwenkrichtung des Hebels (1) nebeneinander angeordnet sind.

12. Gebereinrichtung nach Anspruch 10 und 11, wobei das am Hebel (1) angeordnete Magnetelement (8) zur zeitgleichen Aktivierung zweier in Schwenkrichtung nebeneinander angeordneter Sensorelemente (11, 12, 13, 14) ausgebildet ist.

## Claims

1. Electromechanical transducer device for controlling at least one function of a physically remotely arranged transmission or drive or a vehicle, with a lever (1), which is actuable to be pivotable about at least one first axle (2a, 2b) and mechanically decoupled from the transmissional drive and which is mounted on the first axle (2a, 2b) by means of a suspension (3), wherein the axle (2a, 2b) has at an axial end section at least one first component (6a, 6b) of a magnetic rotational angle sensor arrangement (6a, 6b, 7a, 7b) and for direct detection of the angular setting or of the rotational movement of the lever (1) co-operates with a second component (7a, 7b) of the rotational angle sensor arrangement, which component is arranged on the suspension (3) to be opposite the end section of the axle (2a, 2b), **characterised in that** the axial end section comes to lie within the suspension (3), wherein a circuitboard (15) mounting the rotational angle sensors (7a, 7b) is arranged at the suspension (3) and the circuitboard (15) has at least one projection (17, 18), of flange-like construction which protrudes from the plane of the circuitboard and which is constructed for mounting at least one rotational angle sensor element (7a, 7b) and comes to lie by its area normals substantially parallel to the first axle (2a, 2b).

2. Transducer device according to claim 1, wherein a single rotational angle sensor element (7a, 7b) is provided for detection of the angular setting of the lever (1) with respect to the first axle (2a, 2b).

3. Transducer device according to one of the preceding claims, wherein the first component (6a, 6b) of the rotational angle sensor arrangement (6a, 6b, 7a, 7b) is constructed as a magnet element generating a magnetic field and the second component (7a, 7b) of the rotational angle sensor arrangement (6a, 6b, 7a, 7b) is constructed as a rotational angle sensor.

4. Transducer device according to any one of the preceding claims, wherein one of the components (6a, 6b, 7a, 7b) of the rotational angle sensor arrangement is arranged at an end face at the end section of the axle (2a, 2b) to be secure against rotation relative thereto and the associated other component (6a, 6b, 7a, 7b) is arranged at the suspension in a notional axial prolongation with respect to the axle (2a, 2b).

5. Transducer device according to claim 4, wherein the rotational angle sensor (7a, 7b) is of substantially flat construction and is oriented by its area normals substantially parallel to the first axle (2a, 2b).

6. Transducer device according to any one of the preceding claims 1 to 3, wherein the magnet element (6a, 6b) is arranged on the axle (2a, 2b) and the associated sensor element (7a, 7b) is aligned relative to the axle in such a manner that its area normals point in radial direction with respect to the axle (2a, 2b).

7. Transducer device according to any one of the preceding claims, wherein the lever (1) passes through a slot of the suspension (3) at a radial spacing from the first axle (2a, 2b), which slot extends parallel to the first axle (2a, 2b) and limits a pivot movement of the lever (1) about a second axle (5) relative to the suspension (3).

8. Transducer device according to claim 7, wherein the first axle (2a, 2b) and the second axle (5) are oriented substantially perpendicularly to one another and wherein the suspension (3) is constructed for mounting two bearing pins, which are opposite one another in axial projection, of the first axle (2a, 2b) for pivotable mounting of the suspension (3) relative to the first axle (2a, 2b).

9. Transducer device according to any one of the preceding claims, wherein the suspension (3) is constructed for mounting of a bearing pin (5), which extends substantially perpendicularly to the first axle (2a, 2b) and which is rigidly connected with the lever (1).

10. Transducer device according to any one of the preceding claims, wherein arranged at the lever (1) at a radial spacing from the pivot axis (2a, 2b, 5) is a further magnet element (8), the position of which is detectable by means of a single magnetic position sensor (10) arranged at the suspension (3).

11. Transducer device according to any one of the preceding claims, wherein at least three or more sensor elements (11, 12, 13, 14), which are provided for detection of the position of the lever (1), are arranged adjacent to one another along the pivot direction of the lever (1) at the suspension (3) and/or at the circuitboard (15) fastened thereto.

12. Transducer device according to claim 10 or 11, wherein the magnet element (8) arranged at the lever (1) is constructed for simultaneous activation of two sensor elements (11, 12, 13, 14) arranged adjacent to one another in pivot direction.

## Revendications

1. Dispositif de détection électromécanique pour la commande d'au moins une fonction d'une transmission ou d'un entraînement d'un véhicule disposé à distance spatialement, comprenant un levier (1) pouvant être actionné de manière à pivoter autour d'au moins un premier axe (2a, 2b) et désaccouplé mécaniquement de la transmission ou de l'entraînement, lequel levier est monté au moyen d'une suspension (3) sur le premier axe (2a, 2b), l'axe (2a, 2b) présentant, sur une portion d'extrémité axiale au moins un premier composant (6a, 6b) d'un agencement de capteur d'angle de rotation magnétique (6a, 6b, 7a, 7b) et coopérant pour la détection directe de la position angulaire ou du mouvement de rotation du levier (1), avec un deuxième composant (7a, 7b) de l'agencement de capteur d'angle de rotation, lequel est disposé sur la suspension (3), en face de la portion d'extrémité de l'axe (2a, 2b), **caractérisé en ce que** la portion d'extrémité axiale vient se placer à l'intérieur de la suspension (3), une platine (15) recevant les capteurs d'angle de rotation (7a, 7b) étant disposée sur la suspension (3) et la platine (15) présentant au moins une saillie (17, 18) réalisée sous forme de bride et saillant depuis le plan de la platine, laquelle saillie est réalisée pour recevoir au moins un élément de capteur d'angle de rotation (7a, 7b) et vient se placer avec sa perpendiculaire à la surface essentiellement parallèlement au premier axe (2a, 2b).

2. Dispositif de détection selon la revendication 1, dans lequel, pour déterminer la position angulaire du levier (1) par rapport au premier axe (2a, 2b), on prévoit un unique élément de capteur d'angle de rotation (7a, 7b).

3. Dispositif de détection selon l'une quelconque des revendications précédentes, dans lequel le premier composant (6a, 6b) de l'agencement de capteur d'angle de rotation (6a, 6b, 7a, 7b) est réalisé sous forme d'un élément magnétique produisant un champ magnétique, et le deuxième composant (7a, 7b) de l'agencement de capteur d'angle de rotation (6a, 6b, 7a, 7b) est réalisé sous forme d'un capteur d'angle de rotation.

4. Dispositif de détection selon l'une quelconque des revendications précédentes, dans lequel l'un des composants (6a, 6b, 7a, 7b) de l'agencement de capteur d'angle de rotation est disposé de manière solidaire en rotation du côté frontal sur la portion d'extrémité de l'axe (2a, 2b) et l'autre composant associé (6a, 6b, 7a, 7b) est disposé dans la prolongation axiale imaginaire par rapport à l'axe (2a, 2b) sur la suspension.

5. Dispositif de détection selon la revendication 4, dans lequel le capteur d'angle de rotation (7a, 7b) est réalisé essentiellement sous forme plate et est orienté avec sa perpendiculaire à la surface essentiellement parallèlement au premier axe (2a, 2b).

6. Dispositif de détection selon l'une quelconque des revendications 1 à 3, dans lequel l'élément magnétique (6a, 6b) est disposé sur l'axe (2a, 2b) et l'élément de capteur associé (7a, 7b) est orienté par rapport à l'axe de telle sorte que sa perpendiculaire à la surface soit orientée dans la direction radiale par rapport à l'axe (2a, 2b).

7. Dispositif de détection selon l'une quelconque des revendications précédentes, dans lequel le levier (1) espacé radialement du premier axe (2a, 2b) traverse un trou oblong de la suspension (3), qui s'étend parallèlement au premier axe (2a, 2b) et qui limite un mouvement de pivotement du levier (1) autour d'un deuxième axe (5) par rapport à la suspension (3).

8. Dispositif de détection selon la revendication 7, dans lequel le premier axe (2a, 2b) et le deuxième axe (5) sont orientés essentiellement perpendiculairement l'un à l'autre et dans lequel la suspension (3) est réalisée pour recevoir deux boulons de palier du premier axe (2a, 2b), mutuellement opposés dans le prolongement axial, pour le support pivotant de la suspension (3) par rapport au premier axe (2a, 2b).

9. Dispositif de détection selon l'une quelconque des revendications précédentes, dans lequel la suspension (3) est réalisée pour recevoir un boulon de palier (5) s'étendant essentiellement perpendiculairement au premier axe (2a, 2b), qui est connecté rigidement au levier (1).

10. Dispositif de détection selon l'une quelconque des revendications précédentes, dans lequel un autre élément magnétique (8) est disposé sur le levier (1) à distance radiale de l'axe de pivotement (2a, 2b, 5), dont la position peut être détectée au moyen d'un unique capteur de position magnétique (10) disposé sur la suspension (3).

11. Dispositif de détection selon l'une quelconque des revendications précédentes, dans lequel au moins trois éléments de capteur (11, 12, 13, 14) ou plus, prévus pour la détection de position du levier (1), sont disposés les uns à côté des autres sur la suspension (3) et/ou sur la platine (15) fixée sur celle-ci, le long de la direction de pivotement du levier (1).

12. Dispositif de détection selon les revendications 10 et 11, dans lequel l'élément magnétique (8) disposé sur le levier (1) est réalisé pour activer simultanément deux éléments de capteur (11, 12, 13, 14) disposés l'un à côté de l'autre dans la direction de pivotement.
